# NOUVEAU FASCICULE DE BREVET EUROPEEN

(11) **EP 2 872 424 B2**
(45) Date de publication et mention de la décision concernant l'opposition: **19.01.2022**
(45) Mention de la délivrance du brevet: 14.06.2017
(21) Numéro de dépôt: 13734088.1
(22) Date de dépôt: 04.07.2013
(51) Int. Cl.: B65G 1/137

(54) **SYSTEME ET PROCEDE DE PREPARATION ET DE LIVRAISON DE COMMANDES**
SYSTEM UND VERFAHREN ZUR VORBEREITUNG UND BEREITSTELLUNG VON AUFTRÄGEN
SYSTEM AND METHOD FOR PREPARING AND DELIVERING ORDERS

(30) Priorité: 12.07.2012 FR 1256720
(43) Date de publication de la demande: 20.05.2015
(73) Titulaire: Fives Intralogistics S.A., 69520 Grigny (FR)
(72) Inventeur: ZAK, David, F-38080 L'Isle d'Abeau (FR)
(74) Mandataire: Chougui, Hilel
(86) Numéro de dépôt international: PCT/EP2013/064192
(87) Numéro de publication internationale: WO 2014/009257

(56) Documents cités:
- EP-A1- 1 995 187
- EP-A2- 0 943 561
- WO-A1-2006/088346
- WO-A1-2010/127769
- DE-A1- 19 910 873
- JP-A- 2008 037 567
- JP-A- 2011 207 569
- US-A1- 2008 105 495
- US-A1- 2008 267 759
- US-A1- 2011 106 295

## Description

L'invention a pour objet un procédé de préparation et de livraison de commandes, notamment pour des commandes de produits de consommation courante.

Elle trouve ainsi une application dans le domaine de la commercialisation de type « BtoC » (« business to consumer ») de tels produits (alimentaire - bazar - bricolage, etc...), et plus particulièrement à travers le concept naissant du mode de commercialisation de type « Drive ». Ce mode de commercialisation vise à permettre le retrait rapide, sur le modèle du « Drive-In », des marchandises commandées via Internet, passé un délai de préparation de commande défini par avance (typiquement 2 heures).

L'invention vise ainsi à répondre notamment aux trois problématiques majeures de ce mode de commercialisation :
- la préparation et le stockage de commandes hétérogènes (par exemple produits sec, frais et surgelés) dont les volumes et la répartition ne sont pas maîtrisables ;
- la préservation de la chaine du froid pour les commandes préparées nécessitant des stockages par nature de produits (par exemple produits secs, frais et surgelés) ;
- la réconciliation (stockage par nature de produit) et la livraison des commandes aux clients dans un délai très court après son arrivée sur le lieu de retrait et selon un planning non prédictible.

Le principe du « Drive » est de permettre au client de passer une commande, par exemple via Internet ou par téléphone, ce qui implique une faible visibilité sur les volumes à traiter et sur la planification de préparation des commandes à traiter. Il est en conséquence nécessaire d'apporter une organisation et une productivité qui permette d'absorber des pics et des creux de préparation avec un nombre constant d'opérateurs.

La flexibilité laissée au client vis-à-vis de la plage horaire de récupération de sa commande dégrade sensiblement l'organisation du « Drive ». Il convient donc d'apporter une solution de stockage temporaire des commandes préparées, en attente de récupération, mais également un système permettant une forte réactivité dans la livraison de la commande à l'arrivée du client (moins de 5 minutes dans la plupart des cas) en tenant compte de la nécessité de rassembler les différentes parties de la commande (stockées par nature de produits).

On connaît déjà des sites implantés qui comprennent des systèmes et mettent en oeuvre des procédés qui sont pour la plupart basés sur des solutions de préparation manuelle, ce qui implique un fort effectif pour gérer les pics de préparation (productivité faible) et une forte sous-activité en cas de creux de préparation.

L'augmentation des flux entraine une augmentation proportionnelle du nombre d'opérateurs en préparation, ou préparateurs. A partir de certains volumes, le nombre de préparateurs est tel que la productivité de chaque préparateur baisse car les opérateurs se gênent dans leur circulation. La baisse de productivité entraine alors un besoin d'opérateurs supplémentaires : cercle vicieux, phénomène du « bouchon ».

En outre, les solutions manuelles reposent sur des tâches opérateurs très contraignantes : beaucoup de marche, portage important de colis et d'articles lourds, sans assistance. Les résultats observés font apparaitre de nombreux arrêts de travail chez les opérateurs.

Les rares automatisations existantes à ce jour ne gèrent qu'un des flux présentés précédemment (flux de préparation et flux de livraison de commandes) mais jamais les deux simultanément. EP 0 943 561 A2 décrit un procédé avec répartition de produits selon leur fréquence de prélèvement mais ne décrit pas de répartition selon la nature des produits, ni l'utilisation de conteneurs. L'invention vise donc à résoudre les problèmes précités parmi d'autres problèmes.

Ainsi, l'invention concerne un procédé tel que revendiqué dans la revendication 1, pour la préparation et livraison, dans des conteneurs, de commandes de produits de consommation courante, ces produits étant de natures différentes, notamment des produits secs, des produits frais et des produits surgelés. Le procédé permet de répartir les produits dans au moins deux catégories différentes selon leur nature. Le procédé met en oeuvre au moins deux zones de préparation de commande, destinées à la préparation des produits respectivement de la première et de la deuxième catégories.

Chacune de ces zones de préparation de commande comprend :
- une ou plusieurs zones de stockage et de préparation des produits à prélever,
- une ou plusieurs zones de stockage et de réconciliation pour stocker des conteneurs contenant les produits prélevés, comportant au moins un dispositif de mise à disposition des commandes complètes pour la catégorie de produits correspondante,
- un système d'acheminement pour l'acheminement des conteneurs vides ou pleins depuis la ou les zones de stockage et de préparation de produits à prélever vers la ou les zones de stockage et de réconciliation et réciproquement.

Des variantes de réalisations du procédé sont présentées ci-dessous, chacune pouvant être prise seule ou en combinaison avec une ou plusieurs des autres variantes.

Pour au moins une des zones de préparation de commande, le ou les dispositifs de mise à disposition des commandes complètes pour la catégorie de produits correspondante comprennent au moins un dispositif de préhension des conteneurs.

Le dispositif de préhension peut être un robot de préhension apte à se déplacer sur trois axes.

Pour au moins une des zones de préparation de commande, le ou les dispositifs de mise à disposition des commandes complètes pour la catégorie de produits correspondante comprennent au moins une armoire rotative.

Pour au moins une des zones de préparation de commande, un système de gestion et d'optimisation des emplacements des conteneurs, de préférence informatisé, est apte à piloter le dispositif de mise à disposition des commandes complètes pour la catégorie de produits correspondante.

Le procédé met en oeuvre, pour au moins une des zones de préparation de commande, une ou plusieurs zones de stockage de conteneurs vides.

Le procédé met en oeuvre une zone d'expédition ou de livraison des commandes, ou zone de prélèvement des commandes à livrer, avec laquelle les dispositifs de mise à disposition des commandes complètes par catégorie de produits communiquent.

La zone de prélèvement des commandes à livrer est de préférence agencée, et les dispositifs de mise à disposition des commandes complètes sont de préférence disposés, de sorte à limiter les déplacements nécessaires à un opérateur pour la livraison rapide de la commande à un client.

Le procédé met en oeuvre un système de gestion et d'optimisation des stocks de produits, de préférence informatisé.

Le procédé met en oeuvre un distributeur automatique de commandes, apte à permettre la distribution des commandes préparées et disposées dans la zone de prélèvement des commandes à livrer, sans l'intervention d'un opérateur.

Selon un exemple de réalisation de l'invention, le système d'acheminement est configuré pour permettre l'acheminement automatique des conteneurs devant les zones de stockage et de préparation des produits à prélever concernées par la commande, et l'arrêt de ces conteneurs devant ces zones, et pour permettre le passage des conteneurs devant les zones de stockage et de préparation des produits à prélever non concernées par la commande sans arrêt devant ces zones.

Selon un autre exemple de réalisation de l'invention, le système d'acheminement des conteneurs est manuel dans les zones de stockage et de préparation, notamment pour les produits frais et/ou surgelés.

Le procédé comprend au moins deux étapes de préparation de commande mise en oeuvre respectivement dans deux zones de préparation de commande destinées à la préparation des produits respectivement de la première et de la deuxième catégories.

Chacune de ces deux étapes de préparation de commande comprend :
- une étape de prélèvement et de mise en conteneurs de produits dans une ou plusieurs zones de stockage et de préparation des produits à prélever,
- une étape de réconciliation des produits prélevés contenus dans les conteneurs, dans une ou plusieurs zones de stockage et de réconciliation au moyen d'au moins un dispositif de mise à disposition des commandes complètes pour la catégorie de produits correspondante,
- au moins une étape d'acheminement par un système d'acheminement des conteneurs vides ou pleins depuis la ou les zones de stockage et de préparation de produits à prélever vers la ou les zones de stockage et de réconciliation et réciproquement.

Des variantes de mise en oeuvre du procédé sont présentées ci-dessous, chacune pouvant être prise seule ou en combinaison avec une ou plusieurs des autres variantes.

Le positionnement des conteneurs dans la ou les zones de stockage et de réconciliation est géré par un système de gestion du positionnement, de sorte que les conteneurs d'une même commande soient disposés sur une pile ou à proximité les uns des autres.

Ce système de gestion du positionnement des conteneurs procède en temps masqué à une réorganisation du positionnement des conteneurs d'une même commande de façon à les regrouper et à les rapprocher d'un dispositif de mise à disposition des commandes complètes pour la catégorie de produits correspondante, en sorte de permettre une livraison rapide de la commande au client.

Le nombre de conteneurs nécessaire pour la catégorie de produits correspondante et déterminé au début de l'étape de préparation.

Le nombre de conteneurs vides nécessaire pour la catégorie de produits correspondante est mis à disposition et convoyé sur un circuit permettant aux conteneurs vides de passer devant toutes les zones de stockage et de préparation de produits à prélever concernées par la commande et de s'arrêter devant ces zones, et de passer devant toutes les zones de stockage et de préparation de produits à prélever non concernées par la commande sans s'arrêter devant ces zones.

La mise à disposition des conteneurs vides est effectuée automatiquement par un dispositif de préhension tel qu'un robot de préhension (16) apte à se déplacer sur trois axes, et le circuit de convoyage est un circuit de convoyage automatique.

L'invention permet ainsi de répondre à l'ensemble des problématiques posées par le contexte « Drive » :
- stockage des produits à préparer,
- préparation avec un niveau de productivité tel qu'il permet d'absorber les pics sans nécessité de mobilisation d'un effectif trop important,
- transport des bacs de produits par l'opérateur, hors chargement du véhicule du client, réduit au minimum,
- gestion simultanée des flux de préparation et de stockage/déstockage des commandes, qu'elles soient unitaires, multiples, homogènes ou hétérogènes (fonction de la nature des produits),
- stockage des commandes préparées par nature de produit, permettant de s'affranchir des délais de récupération de la commande par le client,
- mise à disposition, après optimisation du stockage, de l'ensemble des contenants constituant une commandes, et ce quel que soit la nature des produits, dans un temps compatible avec les contraintes imposées.

L'invention apporte donc une gestion simultanée des flux de préparation et de livraison de commande.

L'invention permet également de raccourcir le temps de préparation, avec un délai minimum entre le passage de la commande et la récupération de la commande en magasin plus court que dans les modes de préparation existants.

L'invention augmente sensiblement la capacité de stockage au mètre carré d'entrepôt des commandes préparées en attente de récupération. En effet, avec les solutions manuelles, chaque commande préparée occupe environ 1,5 m², alors qu'il a été constaté que, selon l'invention, chaque commande préparée occupe moins de 0,6 m².

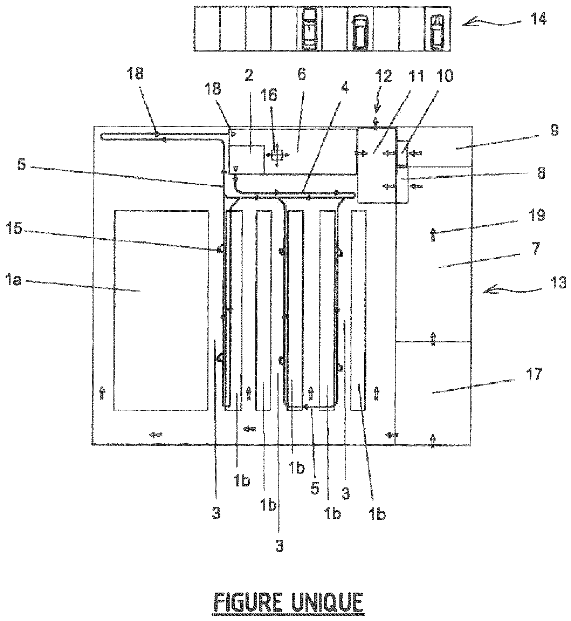

D'autres caractéristiques et avantages de l'invention apparaîtront plus clairement à la lecture de la description ci-après des variantes préférées de mise en oeuvre du procédé, lesquelles sont données à titre d'exemples non limitatifs et en référence au dessin annexé qui représente schématiquement, en vue de dessus, un exemple de système mettant en oeuvre un procédé selon l'invention.

Sur cette figure est représenté schématiquement un exemple de système de préparation et de livraison de commandes de type « Drive», pour des produits de consommation courante répartis dans trois catégories en fonction de la nature de ces produits : produits secs, produits frais, produits surgelés.

Le système comprend un entrepôt 13 dans lequel sont entreposés les produits disponibles à la vente, et dans lequel est mis en oeuvre le procédé, notamment la préparation mécanisée des commandes.

Un espace 14 est prévu pour permettre aux clients de garer leur véhicule lors du retrait de leur commande.

Sur cette figure, les flux de produits et de conteneurs sont représentés par des flèches 18 ou 19, selon que les conteneurs sont convoyés automatiquement ou par l'intermédiaire d'opérateurs.

L'arrivage des produits par camion est réalisé dans la zone 17.

Chaque commande client est enregistrée, ordonnée et scindée par le système informatique de gestion de l'entrepôt afin que tous les produits la constituant soient attribués à un ou plusieurs conteneurs de préparation, tels que des bacs. Plus précisément un ou plusieurs conteneurs de préparation sont attribués pour les produits secs, un ou plusieurs conteneurs de préparation sont attribués pour les produits frais, et un ou plusieurs conteneurs de préparation sont attribués pour les produits surgelés. Chaque commande peut donc être constituée d'un ou plusieurs bacs suivant le nombre, la nature et le volume des articles concernés.

Au lancement du traitement d'une commande, c'est-à-dire au moment de la décision de commencer la préparation d'une commande, on attribue à cette dernière le nombre de bacs nécessaires pour la contenir en intégralité, pour chacune des catégories concernées (produits secs, produits frais, produits surgelés).

Il s'en suit alors un lancement du traitement de chaque commande pour chacune des catégories, tel que décrit ci-après.

### - Zone de stockage et de préparation des produits secs 1a, 1b

Les produits ou articles disponibles à la vente sont stockés dans des meubles d'une manière ordonnée et permettant leur reprise manuelle par un opérateur 15.

Les produits en forte rotation, c'est-à-dire fréquemment commandés par les clients, sont entreposés dans les zones de stockage et de préparation 1 b pour une prise en charge rapide par les opérateurs 15.

Les produits en plus faible rotation sont entreposés dans la zone de stockage et de préparation 1a.

Les bacs vides, mis à disposition par un dispositif de mise à disposition 16 au lancement d'une commande tel qu'il sera expliqué ci-après, sont convoyés automatiquement sur système d'acheminement 4 de type circuit collecteur 4 ou convoyeur 4.

Ce circuit collecteur est conçu et piloté pour permettre aux bacs de passer devant toutes les zones de stockage et de préparation 1a, 1 b.

Pour chaque zone de stockage et de préparation 1a, 1b, les bacs concernés, c'est-à-dire destinés à contenir les articles stockés et à prélever dans ces zones, sont mis à disposition d'un opérateur 15. Celui-ci dépose le ou les articles de son secteur dans chaque bac.

Ces zones de stockage et de préparation 1a, 1b, ou gares de préparation 1a, 1b, sont agencées de manière à présenter la meilleure ergonomie à l'opérateur 15 par rapport à la disposition des produits, et à limiter ainsi ses déplacements. De plus, les bacs en préparation restent sur le convoyeur 4 afin d'éviter au maximum le port de charges lourdes.

Les bacs non concernés par une zone passent au travers sans s'arrêter dans la zone.

Les bacs préparés dans chaque zone continuent le parcours pour éventuellement s'arrêter à la zone suivante.

En fin de préparation, après passage dans l'ensemble des zones ou gares concernées 1a, 1b, les bacs pleins sont convoyés jusqu'à la zone de stockage et de réconciliation des commandes 6.

### - Zone de stockage et réconciliation des commandes de produits secs 6

Cette zone de stockage et de réconciliation des commandes 6 comprend un robot portique 16 se déplaçant selon trois axes, piloté par un logiciel de gestion et d'optimisation des emplacements, pour la mise à disposition des commandes complètes pour la catégorie des produits secs.

A l'initialisation du système, cette zone 6 est constituée de piles de bacs vides destinés à alimenter la préparation de commandes. Par la suite, les bacs vides sont entreposés dans une zone 2 à l'intérieur de la zone de stockage et de réconciliation des commandes 6, également couverte par le robot portique 16.

Un dispositif de préhension des bacs, placé en extrémité du robot 16, permet de constituer des piles et/ou de les déplacer à volonté dans l'espace d'action du robot.

Au lancement d'une commande, comme expliqué plus haut, le robot 16 délivre les bacs vides, de préférence à l'unité, au circuit collecteur et de convoyage 4 pour la préparation des commandes, au fur et à mesure de la demande.

Lorsque les bacs ou conteneurs sont terminés en préparation, c'est-à-dire qu'ils sont pleins ou qu'il n'y a plus de produit à ajouter, ils reviennent à l'entrée de la zone de stockage et réconciliation des commandes 6.

Ces conteneurs sont alors stockés, par exemple au sol, au plus près de la zone de sortie 11, ou zone de prélèvement 11 des commandes des commandes à expédier ou livrer.

Au départ, chaque emplacement destiné à recevoir les conteneurs dans la zone 6, correspond à une commande. Lorsqu'une commande est constituée de plusieurs bacs, les suivants sont déposés sur le premier de manière à constituer une pile de bacs correspondant à la même commande. Au final, le stockage est constitué de piles de bacs pleins correspondant chacune à une commande client.

Afin d'optimiser le processus de rangement et de restitution, le système peut aussi empiler plusieurs commandes pour augmenter la capacité de stockage.

De même, lorsque le système n'est pas sollicité par des actions prioritaires telles que la sortie ou livraison d'une commande vers la zone de prélèvement 11, l'arrivée d'un bac plein en zone 6, la sortie d'un bac vide vers les zones de stockage et de préparation 1a, 1b, il réorganise les bacs stockés de manière à rapprocher les commandes de l'interface de sortie constituée par la zone de prélèvement 11, rapprocher les bacs vides de la sortie des bacs vides sur le circuit de convoyage 4, empiler ou dépiler des commandes pour optimiser les temps de sortie en fonction du volume à stocker.

Lorsque le client arrive pour prendre livraison de sa commande en se présentant dans l'espace 14, le dispositif de mise à disposition des commandes complètes 16 délivre automatiquement l'ensemble des bacs de sa commande via une interface ergonomique (mise sur chariot par exemple) vers la zone de prélèvement des commandes à livrer 11. Cette action est prioritaire par rapport au reste des actions du robot portique 16 (sortie de bacs vides, entrées de commandes préparées, réorganisation du stock...).

Une fois les bacs vidés de leurs articles, ils sont réintégrés dans le stock pour un nouveau cycle.

### - Zone de stockage et de préparation des produits frais 7

Les produits frais disponibles à la vente sont stockés sur palettes d'une manière ordonnée et permettant leur reprise manuelle par un opérateur 15, dans la zone de stockage et de préparation 7.

Les bacs vides, mis à disposition d'un l'opérateur, sont prélevés manuellement lors du lancement d'une commande de produits frais, par exemple par le biais d'un ordre de prélèvement sur le terminal mobile de l'opérateur.

Le prélèvement des produits est effectué manuellement par l'opérateur selon la liste affichée sur son terminal mobile, en un ou plusieurs conteneurs. Les conteneurs dument remplis sont alors rangés manuellement et stockés dans une zone de stockage et de réconciliation des produits frais correspondant à une sous-zone de la zone de stockage et de préparation des produits frais 7.

### - Zone de stockage et réconciliation des commandes de produits frais

Cette zone de stockage et de réconciliation comprend une armoire rotative 8 permettant la mise à disposition des commandes complètes pour la catégorie des produits frais.

Cette armoire rotative 8 permet le stockage et la restitution rapide des commandes de produits frais ainsi préparés. Le point d'entrée de cette armoire 8 est situé à l'intérieure de la zone de stockage et de préparation des produits frais 7, alors que le point de sortie communique avec la zone 11 de prélèvement des commandes à livrer.

Afin de préserver la chaine du froid un volet s'ouvre lors de la demande de sortie des bacs de la zone. Dans tous les autres cas, le volet reste fermé.

Lorsqu'un client arrive pour prendre livraison de sa commande, l'ensemble des bacs ou conteneurs comprenant sa commande est mis à disposition automatiquement au niveau de la zone de prélèvement des commandes à livrer 11.

### - Zone de stockage et de préparation des produits surgelés 9

Les produits surgelés disponibles à la vente sont stockés sur palettes d'une manière ordonnée et permettant leur reprise manuelle par un opérateur dans la zone 9.

Les bacs vides, mis à disposition de l'opérateur, sont prélevés manuellement lors du lancement d'une commande de produits surgelés, par exemple par le biais d'un ordre de prélèvement sur le terminal mobile de l'opérateur.

Le prélèvement des produits est effectué manuellement par l'opérateur selon la liste affichée sur son terminal mobile, en un ou plusieurs conteneurs. Les conteneurs dument remplis sont alors rangés manuellement et stockés dans une zone de stockage et de réconciliation des produits surgelés correspondant à une sous-zone de la zone de stockage et de préparation des produits surgelés 9.

Le stockage dans cette zone est effectué à en emplacement déterminé par le logiciel de gestion du stock de l'entrepôt et indiqué par le biais d'étiquettes. Cet emplacement est mémorisé pour une restitution future.

### - Zone de stockage et réconciliation des commandes de produits surgelés

Cette zone de stockage et de réconciliation comprend un dispositif 10 de mise à disposition des commandes complètes pour la catégorie des produits surgelés, qui peut être une armoire statique 10, par exemple une simple étagère 10.

Chaque case de cette armoire 10 est identifiée par un numéro unique du coté stock, c'est-à-dire du côté de la zone de stockage et de préparation 9, et repérée par une verrine lumineuse du coté zone de prélèvement 11.

Il n'y a aucun mouvement de bacs dès lors que l'opérateur l'a déposé à un emplacement.

Le point d'entrée de cette armoire statique 10 est donc situé en zone surgelés 9 ou zone de stockage et de préparation des produits surgelés à prélever 9, à l'arrière de cette armoire 10.

La sortie de cette armoire statique 10 communique avec la zone de prélèvement des commandes à livrer ou expédier 11, via des portes vitrées permettant de préserver la chaine du froid.

Lorsqu'un client arrive dans l'espace 14 pour prendre livraison de sa commande, l'emplacement des bacs à prélever est signalé, par le biais des verrines lumineuses sur l'armoire statique 10.

### - Zone de prélèvement des commandes à livrer 11

Cette zone 11 est une zone de récupération des bacs constituant une commande complète, pour livraison au client.

Lorsque ce dernier signale sa présence et vient garer son véhicule au niveau de l'espace 14 prévu à cet effet, le système met à disposition l'ensemble des conteneurs constituant la commande et ce, toute nature de produits confondus.

En un seul parcours, un opérateur peut donc collecter l'ensemble de ces bacs, en commençant par les produits secs, et livrer le client final en un temps très court.

Le système peut être automatisé, en sorte de permettre la mise à disposition des commandes aux clients sans l'intervention d'opérateurs. Dans cette configuration, le système comprend un distributeur automatique adapté à l'enlèvement des commandes 24 heures sur 24, 7 jours / 7, qui peut par exemple être situé au niveau de la sortie 12 de la zone 11 de prélèvement des commandes à livrer.

## Revendications

1. Procédé de préparation et de livraison de commandes de produits, tels que des produits de consommation courante, répartissant lesdits produits dans au moins deux catégories différentes en fonction de leur nature, le procédé comprenant au moins deux étapes de préparation de commande mises en œuvre respectivement dans deux zones de préparation de commande pour préparer des produits respectivement de la première et de la deuxième catégories, chacune desdites étapes de préparation de commande comprenant :
- une étape de prélèvement et de mise en conteneurs de produits dans une ou plusieurs zones de stockage et de préparation des produits à prélever ((1a, 1b), 7, 9)),
- une étape de réconciliation des produits prélevés contenus dans les conteneurs, dans une ou plusieurs zones de stockage et de réconciliation (6, 7, 9), au moyen d'au moins un dispositif (16, 8, 10) de mise à disposition des commandes complètes pour la catégorie de produits correspondante,
- au moins une étape d'acheminement par un système d'acheminement (4, 5) des conteneurs vides ou pleins depuis la ou les zones de stockage et de préparation de produits à prélever ((1a, 1b), 7, 9) vers la ou les zones de stockage et de réconciliation et réciproquement (6, 7, 9).

2. Procédé selon la revendication 1, **caractérisé en ce que** lesdites au moins deux catégories différentes sont prises parmi : les produits secs, les produits frais et les produits surgelés.

3. Procédé selon la revendication 1 ou 2, **caractérisé en ce que** le positionnement des conteneurs dans la ou les zones de stockage et de réconciliation (6, 8, 10) est géré par un système de gestion du positionnement, de sorte que les conteneurs d'une même commande soient disposés sur une pile ou à proximité les uns des autres.

4. Procédé selon la revendication 3, **caractérisé en ce que** le système de gestion du positionnement des conteneurs procède en temps masqué à une réorganisation du positionnement des conteneurs d'une même commande de façon à les regrouper et à les rapprocher du dispositif de mise à disposition (16, 8, 10) des commandes complètes, en sorte de permettre une livraison rapide de la commande au client.

5. Procédé selon l'une quelconque des revendications 1 à 4, **caractérisé en ce que**, au début de chaque étape de préparation, un nombre de conteneurs nécessaire pour la catégorie de produits correspondante est déterminé.

6. Procédé selon la revendication 5, **caractérisé en ce que** le nombre de conteneurs vides nécessaire pour la catégorie de produits correspondante est mis à disposition et convoyé sur un circuit permettant aux conteneurs vides de passer devant toutes les zones de stockage et de préparation de produits à prélever ((1a, 1b), 7, 9)) concernées par la commande et de s'arrêter devant ces zones, et de passer devant toutes les zones de stockage et de préparation de produits à prélever ((1a, 1b), 7, 9)) non concernées par la commande sans s'arrêter devant ces zones.

7. Procédé selon la revendication 6, **caractérisé en ce que** la mise à disposition des conteneurs vides est effectuée automatiquement par un dispositif de préhension (16) tel qu'un robot de préhension apte à se déplacer sur trois axes, et **en ce que** le circuit de convoyage est un circuit de convoyage automatique (4).

8. Procédé selon l'une quelconque des revendications 1, **caractérisé en ce que**, pour au moins une des zones de préparation de commande, le ou les dispositifs (16, 8, 10) de mise à disposition des commandes complètes pour la catégorie de produits correspondante comprennent au moins un dispositif de préhension (16) des conteneurs, tel qu'un robot de préhension (16) apte à se déplacer sur trois axes.

9. Procédé selon l'une quelconque des revendications 1, **caractérisé en ce que**, pour au moins une des zones de préparation de commande, le ou les dispositifs (16, 8, 10) de mise à disposition des commandes complètes pour la catégorie de produits correspondante comprennent au moins une armoire rotative (8).

10. Procédé selon l'une quelconque des revendications 1, mettant en œuvre, pour au moins une des zones de préparation de commande, un système de gestion et d'optimisation des emplacements des conteneurs apte à piloter le dispositif (16, 8, 10) de mise à disposition des commandes complètes pour la catégorie de produits correspondante.

11. Procédé selon l'une quelconque des revendications 1, mettant en œuvre, pour au moins une des zones de préparation de commande, une ou plusieurs zones de stockage de conteneurs vides (2, 7, 9).

12. Procédé selon l'une quelconque des revendications 1, mettant en œuvre une zone de prélèvement des commandes à livrer (11) avec laquelle les dispositifs (16, 8, 10) de mise à disposition des commandes complètes de chaque catégorie de produits communiquent.

13. Procédé selon la revendication 12, **caractérisé en ce que** la zone de prélèvement des commandes à livrer (11) est agencée, et les dispositifs (16, 8, 10) de mise à disposition des commandes complètes de chaque catégorie de produits sont disposés, de sorte à limiter les déplacements nécessaires à un opérateur pour la livraison rapide de la commande à un client.

14. Procédé selon l'une quelconque des revendications 1, mettant en œuvre un système de gestion et d'optimisation des stocks de produits.

15. Procédé selon l'une quelconque des revendications 1, **caractérisé en ce que** le système d'acheminement (4) est configuré pour permettre l'acheminement automatique des conteneurs devant les zones de stockage et de préparation des produits à prélever (1a, 1b) concernées par la commande, et l'arrêt de ces conteneurs devant ces zones, et pour permettre le passage des conteneurs devant les zones de stockage et de préparation des produits à prélever (1a, 1b) non concernées par la commande sans arrêt devant ces zones.

## Patentansprüche

1. Verfahren zur Vorbereitung und zum Liefern von Bestellungen von Produkten, beispielsweise von gängigen Verbrauchsprodukten, wobei die Produkte abhängig von ihrer Art in mindestens zwei unterschiedliche Kategorien aufgeteilt sind, wobei das Verfahren mindestens zwei Schritte des Vorbereitens der Bestellung aufweist, welche jeweilig in zwei Bestellungsvorbereitungszonen zum Vorbereiten der jeweiligen Produkte der ersten und der zweiten Kategorie umgesetzt werden, wobei jeder der Schritte des Vorbereitens der Bestellung aufweist:
- einen Schritt des Entnehmens und des In-Behälter-Setzens von Produkten in einer oder mehreren Zonen zur Lagerung und zur Vorbereitung der zu entnehmenden Produkte ((1a, 1b), 7, 9),
- einen Schritt des Zusammenführens der entnommenen Produkte, welche in den Behältern enthalten sind, in einer oder mehreren Zonen zur Lagerung und zur Zusammenführung (6, 7, 9) mittels mindestens einer Vorrichtung (16, 8, 10) zur Bereitstellung der vollständigen Bestellungen für die korrespondierende Kategorie von Produkten,
- mindestens einen Schritt des Beförderns, mittels eines Systems zur Beförderung (4, 5), der leeren oder gefüllten Behälter von der oder den Zonen zur Lagerung und zur Vorbereitung der zu entnehmenden Produkte ((1a, 1b), 7, 9) aus in Richtung zu der oder den Zonen zur Lagerung und zur Zusammenführung und umgekehrt (6, 7, 9).

2. Verfahren gemäß Anspruch 1, **gekennzeichnet dadurch, dass** die mindestens zwei unterschiedlichen Kategorien ausgewählt sind aus: den Trockenprodukten, den Frischprodukten und den Tiefkühlprodukten.

3. Verfahren gemäß Anspruch 1 oder 2, **gekennzeichnet dadurch, dass** die Positionierung der Behälter in der oder den Zonen zur Lagerung und zur Zusammenführung (6, 8, 10) mittels eines Systems zur Verwaltung der Positionierung derart verwaltet wird, dass die Behälter einer gleichen Bestellung auf einem Stapel oder in der Nähe zueinander angeordnet werden.

4. Verfahren gemäß Anspruch 3, **gekennzeichnet dadurch, dass** das System zur Verwaltung der Positionierung der Behälter im Hintergrund eine Neuorganisation der Positionierung der Behälter einer gleichen Bestellung durchführt, um diese neu zu gruppieren und an die Vorrichtung zur Bereitstellung (16, 8, 10) der vollständigen Bestellungen heran zu bringen, so dass eine schnelle Lieferung der Bestellung an den Kunden ermöglicht wird.

5. Verfahren gemäß irgendeinem der Ansprüche 1 bis 4, **gekennzeichnet dadurch, dass** zu Beginn jedes Schritts des Vorbereitens eine für die korrespondierende Kategorie von Produkten erforderliche Anzahl von Behältern ermittelt wird.

6. Verfahren gemäß Anspruch 5, **gekennzeichnet dadurch, dass** die für die korrespondierende Kategorie von Produkten erforderliche Anzahl von leeren Behälter bereitgestellt wird und befördert wird auf einem Kreislauf, welcher es den leeren Behälter erlaubt, vor allen von den von der Bestellung betroffenen Zonen zur Lagerung und zur Vorbereitung der zu entnehmenden Produkte ((1a, 1b), 7, 9)) vorbeizulaufen und vor diesen Zonen stehen zu bleiben sowie vor allen von den von der Bestellung nicht betroffenen Zonen zur Lagerung und zur Vorbereitung der zu entnehmenden Produkte ((1a, 1b), 7, 9)) vorbeizulaufen, ohne vor diesen Zonen stehenzubleiben.

7. Verfahren gemäß Anspruch 6, **gekennzeichnet dadurch, dass** das Bereitstellen der leeren Behälter mittels einer Vorrichtung zum Greifen (16), beispielsweise einem Roboter zum Greifen, welcher eingerichtet ist, sich entlang von drei Achsen zu bewegen, automatisch durchgeführt wird, und dadurch, dass der Kreislauf zur Beförderung ein Kreislauf zur automatischen Beförderung (4) ist.

8. Verfahren gemäß Anspruch 1,
**gekennzeichnet dadurch, dass** bei mindestens einer der Bestellungsvorbereitungszonen die Vorrichtung oder Vorrichtungen (16, 8, 10) zur Bereitstellung der vollständigen Bestellung für die korrespondierende Kategorie von Produkten aufweisen mindestens eine Vorrichtung zum Greifen (16) der Behälter, beispielsweise einen Roboter zum Greifen (16), welcher eingerichtet ist, sich entlang von drei Achsen zu bewegen.

9. Verfahren gemäß Anspruch 1, **gekennzeichnet dadurch, dass** bei mindestens einer der Bestellungsvorbereitungszonen die Vorrichtung oder Vorrichtungen (16, 8, 10) zur Bereitstellung der vollständigen Bestellung für die korrespondierende Kategorie von Produkten mindestens einen Drehschrank (8) aufweisen.

10. Verfahren gemäß Anspruch 1, welches bei mindestens einer der Bestellungsvorbereitungszonen ein System zur Verwaltung und zur Optimierung der Stellplätze der Behälter, welches dazu eingerichtet ist, die Vorrichtung (16, 8, 10) zur Bereitstellung der vollständigen Bestellungen für die korrespondierende Kategorie von Produkten zu steuern, umsetzt.

11. Verfahren gemäß Anspruch 1, welches bei mindestens einer der Bestellungsvorbereitungszonen eine oder mehrere Zonen zur Lagerung von leeren Behältern (2, 7, 9) umsetzt.

12. Verfahren gemäß Anspruch 1, welches eine Zone zur Entnahme der zu liefernden Bestellungen (11) realisiert, mit welcher die Vorrichtungen (16, 8, 10) zur Bereitstellung der vollständigen Bestellungen jeder Kategorie von Produkten kommunizieren.

13. Verfahren gemäß Anspruch 12, **gekennzeichnet dadurch, dass** die Zone zur Entnahme der zu liefernden Bestellungen (11) eingerichtet ist und die Vorrichtungen (16, 8, 10) zur Bereitstellung der vollständigen Bestellungen jeder Kategorie von Produkten angeordnet sind, so dass die für einen Bediener erforderlichen Bewegungen zur schnellen Lieferung der Bestellung an einen Kunden begrenzt werden.

14. Verfahren gemäß Anspruch 1, welches ein System zur Verwaltung und zur Optimierung der Vorräte von Produkten umsetzt.

15. Verfahren gemäß Anspruch 1, **gekennzeichnet dadurch, dass** das System zur Beförderung (4) dazu eingerichtet ist, um die automatische Beförderung von Behältern vor die von der Bestellung betroffenen Zonen zur Lagerung und
zur Vorbereitung der zu entnehmenden Produkte (1a, 1b) und das Stehenbleiben dieser Behälter vor diesen Zonen zu ermöglichen und um das Vorbeilaufen der Behälter vor den von der Bestellung nicht betroffenen Zonen zur Lagerung und zur Vorbereitung der zu entnehmenden Produkte (1a, 1b), ohne vor diesen Zonen stehenzubleiben, zu ermöglichen.

## Claims

1. A method for preparing and delivering product orders, such as consumer products, distributing said products into at least two different categories based on their nature, the method comprising at least two order preparation steps carried out respectively in two distinct order preparation zones for preparing products for the first and second categories, respectively, each of said order preparation steps comprising:
- a step for withdrawing products in one or more storage and preparation zones of the products to be withdrawn and placing them in containers ((1b, 1b), 7, 9),
- a step for reconciling the withdrawn products contained in the containers, in one or more storage and reconciliation zones (6, 7, 9), using at least one device (16, 8, 10) for providing complete orders for the corresponding product category,
- at least one step for using a conveying system (4, 5) to convey empty or full containers from the storage and preparation zone(s) for products to be withdrawn ((1a, 1b), 7, 9) toward the storage and reconciliation zone(s) (6, 7, 9), and vice versa.

2. The method according to claim 1, **characterized in that** said at least two different categories are taken among: dry products, cold products and frozen products.

3. The method according to claim 1 or 2, **characterized in that** the positioning of the containers in the storage and reconciliation zone(s) (6, 8, 10) is managed by a position management system, such that the containers of a same order are positioned in a stack or close to each other.

4. The method according to claim 3, **characterized in that** the position management system for the containers uses downtime to reorganize the positioning of the containers of a same order so as to group them together and bring them close to a device (16, 8, 10) for providing the complete orders, so as to allow quick delivery of the order to the customer.

5. The method according to any one of claims 1 to 4, **characterized in that**, at the beginning of each preparation step, the number of containers necessary for the corresponding product category is determined.

6. The method according to claim 5, **characterized in that** the number of empty containers necessary for the corresponding product category is provided and conveyed over a circuit allowing the containers to pass in front of all of the storage and preparation zones for the products to be withdrawn ((1a, 1b), 7, 9) for the order and to stop in front of those zones, and to pass in front of all of the storage and preparation zones for products to be withdrawn ((1a, 1b), 7, 9) that are not affected by the order without stopping in front of those zones.

7. The method according to claim 6, **characterized in that** the provision of empty containers is done automatically by a gripping device (16) such as a gripping robot (16) able to move along three axes, and **in that** the conveying circuit is an automatic conveying circuit (4).

8. The method according to claim 1, **characterized in that**, for at least one of the order preparation zones, the device(s) (16, 8, 10) for providing complete orders for the corresponding product category comprise at least one gripping device (16) for the containers, such as a gripping robot (16) able to move along three axes.

9. The method according to claim 1, **characterized in that**, for at least one of the order preparation zones, the device(s) (16, 8, 10) for providing complete orders for the corresponding product category comprise at least one rotating cabinet (8).

10. The method according to claim 1, using, for at least one of the order preparation zones, a system for managing and optimizing the locations of the containers, preferably computerized, able to steer the device (16, 8, 10) for providing complete orders for the corresponding product category.

11. The system according to claim 1, using, for at least one of the order preparation zones, one or more empty container storage zones (2, 7, 9).

12. The method according to claim 1, using a zone (11) for withdrawing orders to be delivered, with which the devices (16, 8, 10) for providing complete orders by product category communicate.

13. The method according to claim 12, **characterized in that** the zone (11) for withdrawing orders to be delivered is preferably arranged, and the devices (16, 8, 10) for providing complete orders from each product category are arranged, so as to limit the movements necessary for an operator to deliver the order to a customer quickly.

14. The method according to claim 1, using a product inventory management and optimization system.

15. The method according to claim 1, **characterized in that** the conveyance system (4) is configured to allow containers to be conveyed automatically in front of the storage and preparation zones for products (1a, 1b) to be withdrawn for the order, and stopping those containers in front of those zones, and to allow the containers to pass in front of the storage and preparation zones for products (1a, 1b) to be withdrawn not affected by the order without stopping in front of those zones.
